# EUROPÄISCHE PATENTANMELDUNG

(11) **EP 1 871 039 A1**
(43) Veröffentlichungstag der Anmeldung: **26.12.2007**
(21) Anmeldenummer: 06012695.0
(22) Anmeldetag: 21.06.2006
(51) Int. Cl.: H04L 12/28, H04Q 7/32, H04Q 7/38

(54) **Datenübertragungseinrichtung und Verfahren zur Datenübertragung zwischen einem Netzwerk und einer mobilen Datenübertragungseinheit**

(71) Anmelder: ads-tec AUTOMATION DATEN- UND SYSTEMTECHNIK GmbH, 70711 Leinfelden-Echterdingen (DE)
(72) Erfinder: Bossler, Armin, 73240 Wendlingen (DE); Pfendtner, Steffen, 71364 Kernen i.R. (DE); Speidel, Thomas, 71706 Markgröningen (DE)
(74) Vertreter: Wasmuth, Rolf

(57) **Zusammenfassung**

Eine Datenübertragungseinrichtung (1, 21) besitzt ein Netzwerk (2) und eine mobile Datenübertragungseinheit (7, 27). Das Netzwerk (2) besitzt mindestens zwei Zugriffspunkte (3, 4) zur kabellosen Verbindung mit der Datenübertragungseinheit (7, 27). Um ein unterbrechungsfreies Umschalten vom ersten auf den zweiten Zugriffspunkt zu ermöglichen, ist vorgesehen, daß die Datenübertragungseinheit (1, 21) mindestens zwei Module (8, 9) zur Übertragung von Daten besitzt und daß die Datenübertragungseinheit (7, 27) eine Umschalteinrichtung (12) zum Umschalten zwischen den Modulen (8, 9) besitzt, die so ausgebildet ist, daß in jedem Schaltzustand der Umschalteinrichtung (21) nur über eines der Module (8, 9) Nutzdaten übertragen werden können. Ein Verfahren zur Datenübertragung zwischen einem Netzwerk (2) und einer mobilen Datenübertragungseinheit (7, 27) sieht vor, daß die Umschalteinrichtung (12) in einem ersten Schaltzustand nur über ein erstes Modul (8) Nutzdaten zu einem ersten Zugriffspunkt (3) überträgt und daß die Umschalteinrichtung (12) bei Vorliegen einer oder mehrerer vorgegebenen Bedingungen in einen zweiten Schaltzustand umschaltet, in dem die Umschalteinrichtung (12) nur über das zweite Modul (9) Nutzdaten zu einem zweiten Zugriffspunkt (4) überträgt.

## Beschreibung

Die Erfindung betrifft eine Datenübertragungseinrichtung der im Oberbegriff des Anspruchs 1 angegebenen Gattung sowie ein Verfahren zur Datenübertragung der im Oberbegriff des Anspruchs 7 angegebenen Gattung.

Aus der EP 1 578 059 A1 ist eine Datenübertragungseinrichtung bekannt, die mehrere lokale Netzwerke und eine mobile Datenübertragungseinheit umfaßt.

Bewegt sich die mobile Datenübertragungseinheit vom Bereich eines ersten Zugriffspunkts in den Bereich eines zweiten Zugriffspunkts, wird bei bekannten Datenübertragungseinheiten zunächst die Verbindung zum ersten Zugriffspunkt unterbrochen und anschließend mit dem zweiten, näher liegenden Zugriffspunkt eine Verbindung aufgebaut. Für die Zeitspanne, während der die Verbindung zum zweiten Zugriffspunkt aufgebaut wird, besteht keine Verbindung zum Netzwerk. Während dieser Zeitspanne zu übertragende Nutzdaten müssen zwischengespeichert werden. Insbesondere für industrielle Anwendungen ist die benötigte Dauer für den Aufbau einer Verbindung zum zweiten Zugriffspunkt, während der keine Verbindung zu dem lokalen Netzwerk besteht, und die damit verbundene Verzögerung im Datenverkehr nicht akzeptabel. Bei bekannten Systemen werden Stapelspeicher eingesetzt, die während des Umschaltvorgangs intensiv genutzt werden. Diese Zwischenspeicherung von Daten führt zu deutlichen Verzögerungen im Datenverkehr.

Der Erfindung liegt die Aufgabe zugrunde, eine Datenübertragungseinrichtung der gattungsgemäßen Art zu schaffen, bei der eine Unterbrechung der Datenverbindung zu dem Netzwerk vermieden ist. Eine weitere Aufgabe der Erfindung liegt darin, ein Verfahren zur Datenübertragung zwischen einem Netzwerk und einer mobilen Datenübertragungseinheit anzugeben, mit dem sich eine Unterberechung der Datenverbindung der Datenübertragungseinheit zu dem Netzwerk vermeiden läßt.

Bezüglich der Datenübertragungseinheit wird diese Aufgabe mit einer Datenübertragungseinheit nach dem Anspruch 1 gelöst.

Dadurch, daß die Datenübertragungseinheit zwei Module besitzt, kann mit einem der Module eine neue Datenverbindung aufgebaut werden, während mit einem anderen Modul noch Nutzdaten übertragen werden. Die Umschalteinrichtung erlaubt ein Umschalten zwischen den Modulen. Dadurch, daß nur über eines der Module Nutzdaten übertragen werden können, ist eine Redundanz der übertragenden Daten sicher vermieden. Im lokalen Netzwerk müssen deshalb keine zusätzlichen Einrichtungen zur Filterung doppelt übertragener Nutzdaten vorgesehen sein.

Vorteilhaft ist die Umschalteinrichtung mit jedem Modul über eine separate Datenverbindung verbunden und die Umschalteinrichtung ist so ausgebildet, daß in jedem Schaltzustand nur über eine der Datenverbindungen Nutzdaten gesendet werden können. Die Module können dadurch in üblicher Weise ausgebildet sein. Das Umschalten zwischen den Modulen folgt ausschließlich über die Umschalteinrichtung. Vorteilhaft besitzen alle Module in dem Netzwerk eine gemeinsame MAC-Adresse. Für das Netzwerk ist es unerheblich, über welches der Module Nutzdaten gesendet werden. Da sichergestellt ist, daß nur über eines der Module Nutzdaten versendet werden, können die Module über eine gemeinsame MAC-Adresse adressiert werden. Das Netzwerk kann dadurch in üblicher Weise aufgebaut sein. Spezielle Anpassungen des Netzwerks auf die mobile Datenübertragungseinheit sind nicht nötig. Die Anzahl benötigter MAC-Adressen wird nicht erhöht.

Es kann vorgesehen sein, daß jedes Modul eine Antenne zur Übertragung von Daten besitzt. Dadurch können die Module auf unterschiedlichen Frequenzen senden. Es kann jedoch auch vorgesehen sein, daß mindestens zwei Module über einen Splitter mit einer gemeinsamen Antenne verbunden sind. Dadurch läßt sich die Anzahl der Antennen verringern. Insbesondere kommt nur eine Antenne für alle Module zum Einsatz. Es kann vorgesehen sein, daß mindestens zwei Module auf unterschiedlichen Frequenzen senden.

Für ein Verfahren zur Datenübertragung zwischen einem Netzwerk und einer mobilen Datenübertragungseinheit, wobei das Netzwerk mindestens zwei Zugriffspunkte zur kabellosen Verbindung mit der Datenübertragungseinheit besitzt, ist vorgesehen, daß die Datenübertragungseinheit mindestens zwei Module zur kabellosen Übertragung von Daten und eine Umschalteinrichtung zum Umschalten zwischen den Modulen besitzt, wobei die Umschalteinrichtung in einem ersten Schaltzustand nur über ein erstes Modul Nutzdaten zu einem ersten Zugriffspunkt überträgt und wobei die Umschalteinrichtung bei Vorliegen einer oder mehrerer vorgegebener Bedingungen in einen zweiten Schaltzustand umschaltet, in dem die Umschalteinrichtung nur über ein zweites Modul Nutzdaten zu einem zweiten Zugriffspunkt überträgt.

Dadurch, daß entweder über das erste oder über das zweite Modul Nutzdaten übertragen werden, kann zu jedem Zeitpunkt eine Datenverbindung zu dem Netzwerk aufrechterhalten werden. Das Umschalten kann verzögerungsfrei erfolgen, so daß ein Zwischenspeichern von Nutzdaten nicht notwendig ist.

Vorteilhaft sucht mindestens ein weiteres Modul nach weiteren Zugriffspunkten und versucht, eine Standby-Datenverbindung zu einem weiteren Zugriffspunkt herzustellen, während das erste Modul Nutzdaten über eine kabellose Datenverbindung zu dem ersten Zugriffspunkt überträgt. Dadurch, daß das weitere Modul bereits eine Datenverbindung zu einem weiteren Zugriffspunkt vorbereitet, während noch Nutzdaten übertragen werden, kann die bei bekannten Systemen für das Einbuchen an einem weiteren Zugriffspunkt benötigte Zeit als Ausfallzeit eliminiert werden. Vorteilhaft führt die Umschalteinrichtung den Umschaltvorgang zwischen dem ersten und einem zweiten Modul aus, nachdem das zweite Modul eine betriebsbereite Standby-Datenverbindung zu dem zweiten Zugriffspunkt hergestellt hat. Das Herstellen der Standby-Datenverbindung umfaßt vorteilhaft die Autorisierung und Anmeldung in dem Netzwerk, die Abhandlung der Verschlüsselung und die Einbuchung in das Netzwerk. Es kann jedoch auch vorgesehen sein, daß das Herstellen der Standby-Datenverbindung nur einen Teil dieser Aktivitäten umfaßt. Zweckmäßig erfolgt das Umschalten ohne Verzögerung und ohne Zwischenspeicherung von Nutzdaten. Dadurch ist sichergestellt, daß zu jedem Zeitpunkt eine Datenverbindung zwischen dem Netzwerk und der mobilen Datenübertragungseinheit besteht. Dadurch ist der Einsatz der Datenübertragungseinrichtung insbesondere für industrielle Anwendungen, in denen eine zeitgenaue Übertragung der Daten wesentlich ist, möglich. Es kann vorgesehen sein, daß mindestens zwei Module der Datenübertragungseinheit auf unterschiedlichen Frequenzen senden. Das Netzwerk ist insbesondere ein lokales Netzwerk.

Ausführungsbeispiele der Erfindung werden im folgenden anhand der Zeichnung erläutert. Es zeigt:
- Fig. 1: eine schematische Darstellung einer ersten Datenübertragungseinrichtung,
- Fig. 2: eine schematische Darstellung einer zweiten Datenübertragungseinrichtung.

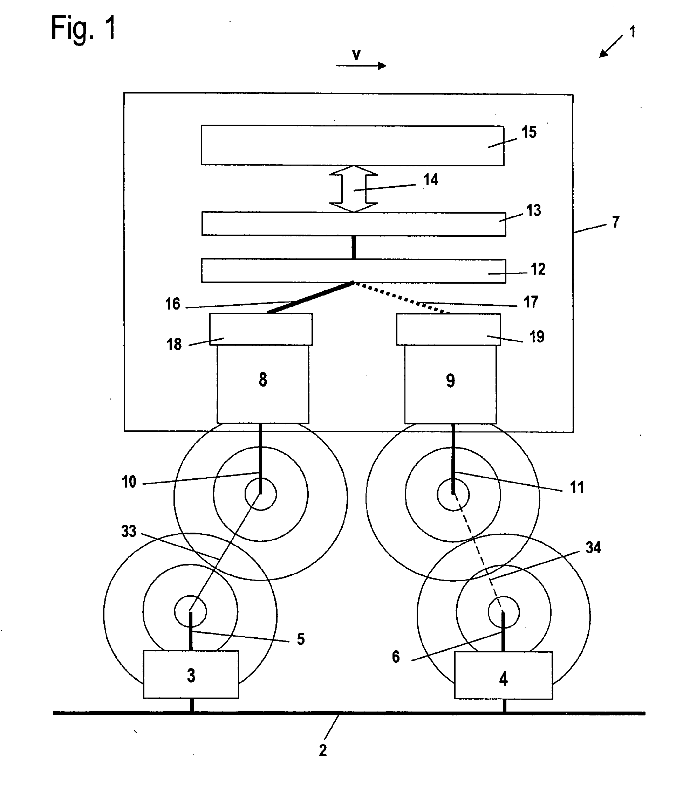

Die in Fig. 1 schematisch gezeigte Datenübertragungseinrichtung 1 umfaßt ein lokales Netzwerk 2, das beispielsweise ein Ethernet-Netzwerk sein kann. Das lokale Netzwerk 2 besitzt mehrere, insbesondere eine Vielzahl Zugriffspunkte. In Fig. 1 ist ein erster Zugriffspunkt 3 und ein zweiter Zugriffspunkt 4 gezeigt. Der erste Zugriffspunkt 3 besitzt eine Antenne 5 und der zweite Zugriffspunkt 4 eine Antenne 6 zum kabellosen Senden und Empfangen von Daten. Die Antennen 5 und 6 können auf der gleichen Frequenz senden, es können jedoch auch unterschiedliche Frequenzen für die Antennen 5 und 6 vorgesehen sein.

Die Datenübertragungseinrichtung 1 besitzt eine mobile Datenübertragungseinheit 7, die sich mit einer Geschwindigkeit v gegenüber dem lokalen Netzwerk 2 bewegt. Die mobile Datenübertragungseinheit 7 besitzt eine Anwendung 15, die Nutzdaten generiert. Die Nutzdaten, die von der Anwendung 15 generiert werden, können unterschiedlichster Natur sein. Beispielsweise kann die Anwendung 15 Meßdaten liefern. Die Anwendung 15 ist über eine Schnittstelle 14 mit einem Treiber 13 verbunden. Die Schnittstelle 14 ist insbesondere eine Programmierschnittstelle (API - Application Programming Interface). Der Treiber 13 kann beispielsweise ein WLAN-Treiber, also ein Treiber für ein kabelloses lokales Funknetz (WLAN - Wireless Local Area Network) sein. Der Treiber 13 ist über eine Umschalteinrichtung 12 mit einem ersten Modul 8 und einem zweiten Modul 9 verbunden. Die Module 8 und 9 sind Funkmodule. Das Modul 8 besitzt eine Antenne 10 und das Modul 9 eine Antenne 11 zur kabellosen Übertragung von Daten. Die Module 8 und 9 besitzen jeweils einen Stapelspeicher 18, 19. Die Umschalteinrichtung 12 ist über eine erste Datenverbindung 16 mit dem Stapelspeicher 18 des ersten Moduls 8 verbunden und mit einer zweiten Datenverbindung 17 mit dem Stapelspeicher 19 des zweiten Moduls 9. Die Datenverbindung 16 dient zur Übertragung von Nutzdaten, während die Datenverbindung 17 im Standby-Betrieb ist. Über die Datenverbindung 17 werden keine Nutzdaten übertragen, die Datenverbindung 17 ist jedoch bereit zur Nutzdatenübertragung.

Die Stapelspeicher 18 und 19 dienen dazu, protokollspezifische Verzögerungen durch das kabellose lokale Funknetz abzufedern. Beispielsweise aufgrund von Störungen kann es während der Nutzdatenübertragung notwendig sein, daß ein Datenpaket erneut angefordert und versendet wird. In den Stapelspeichern 18 bzw. 19 können in diesem Fall die nachfolgenden Nutzdaten zwischengespeichert werden.

In Fig. 1 ist die Umschalteinrichtung 12 in einem ersten Schaltzustand gezeigt, in dem über die Datenverbindung 16 und das erste Modul 8 Nutzdaten übertragen werden. Das erste Modul 8 ist über eine Datenverbindung 33, die als Funkdatenverbindung ausgebildet ist, mit dem ersten Zugriffspunkt 3 des lokalen Netzwerks 2 verbunden. Über die Datenverbindung 33 werden die Nutzdaten von dem ersten Modul 8 zum ersten Zugriffspunkt 3 übertragen. Während der Übertragung der Nutzdaten sucht das zweite Modul 9 nach weiteren Zugriffspunkten. Hat das zweite Modul 9 einen zweiten Zugriffspunkt 4 gefunden, so versucht es, eine Standby-Datenverbindung 34 zu dem zweiten Zugriffspunkt 4 herzustellen. Das Herstellen der Standby-Datenverbindung 34 umfaßt die Autorisierung und Anmeldung des zweiten Moduls 9 am zweiten Zugriffspunkt 4 des lokalen Netzwerks 2, die Abhandlung der Verschlüsselung und die Einbuchung in das lokale Netzwerk 2. Die Standby-Datenverbindung 34 ist dann bereit zum Versenden von Nutzdaten. Kann das zweite Modul 9 keine Datenverbindung zu dem zweiten Zugriffspunkt 4 herstellen, beispielsweise, weil der zweite Zugriffspunkt 4 überlastet ist, so sucht das zweite Modul 9 nach weiteren Zugriffspunkten zur Herstellung einer Standby-Datenverbindung. Auch wenn die Herstellung einer Standby-Datenverbindung zu einem Zugriffspunkt erfolgreich war, sucht das zweite Modul 9 weiter nach Zugriffspunkten, zu denen sich eine Verbindung herstellen läßt, die besser als die bestehende Standby-Datenverbindung ist.

Die Umschalteinrichtung 12 kann beispielsweise anhand der Feldstärke, die von den Antennen 5 und 6 der Zugriffspunkte 3 und 4 an der mobilen Datenübertragungseinheit 7 erzeugt wird, zwischen den Modulen 8 und 9 umschalten. Für das Umschalten können auch weitere oder andere Bedingungen, wie beispielsweise die WLAN - Frequenz und/oder Zeitfaktoren vorgesehen sein. Die Umschalteinrichtung 12 überprüft laufend, ob die Bedingung zum Umschalten erfüllt ist. Ist die Bedingung zum Umschalten erfüllt und hat das zweite Modul 9 zu dem zweiten Zugriffspunkt 4 eine Standby-Datenverbindung 34 aufgebaut, so schaltet die Umschalteinreinrichtung 12 vom ersten Modul 8 zum zweiten Modul 9 um. Dann werden die Nutzdaten nicht mehr über die Datenverbindung 16 zum Stapelspeicher 18 des ersten Moduls 8, sondern ab dem Zeitpunkt des Umschaltens zum Stapelspeicher 19 des zweiten Moduls 9 übertragen. Das Umschalten zwischen den Modulen 8 und 9 erfolgt in einem Zeitraum von Mikro- bis Millisekunden, insbesondere in einigen Nanosekunden, also ohne in Bezug auf die Datenübertragung meßbare Verzögerung.

Die Umschalteinrichtung 12 überprüft die Bedingung bzw. die Bedingungen zum Umschalten und steuert den Umschaltvorgang. Die Umschalteinrichtung 12 besitzt einen Mikroprozessor (CPU - Central Processing Unit). Der Umschaltvorgang erfolgt softwaretechnisch dadurch, daß im Befehlscode des Mikroprozessors zwei Zeiger vertauscht werden. Der Zeitaufwand, der für den Umschaltvorgang benötigt wird, ist abhängig vom Prozessortakt des verwendeten Mikroprozessors. Bei einem Prozessortakt von beispielsweise 533 MHz läßt sich der Umschaltvorgang in etwa 20 ns verwirklichen. Aufgrund der kurzen Umschaltzeit ist eine Zwischenspeicherung von Daten nicht notwendig. Die Stapelspeicher 18 und 19 werden beim Umschaltvorgang nicht benötigt.

Da entweder über das erste Modul 8 oder über das zweite Modul 9 eine Datenverbindung zum lokalen Netzwerk 2 besteht, können die Nutzdaten ohne Zwischenspeicherung an das lokale Netzwerk 2 übertragen werden. Ausgenommen der vernachlässigbar kurzen Zeit, während der die Umschalteinrichtung 12 zwischen den Modulen 8 und 9 umschaltet, besteht zu jeder Zeit eine Datenverbindung zwischen dem lokalen Netzwerk 2 und der mobilen Datenübertragungseinheit 7. Nach dem Umschalten übernimmt das erste Modul 8 die Suche nach weiteren Zugriffspunkten und versucht, eine Standby-Datenverbindung zu einem Zugriffspunkt herzustellen. Bei jedem Umschaltvorgang werden die Funktionen des ersten Moduls 8 und des zweiten Moduls 9 vertauscht.

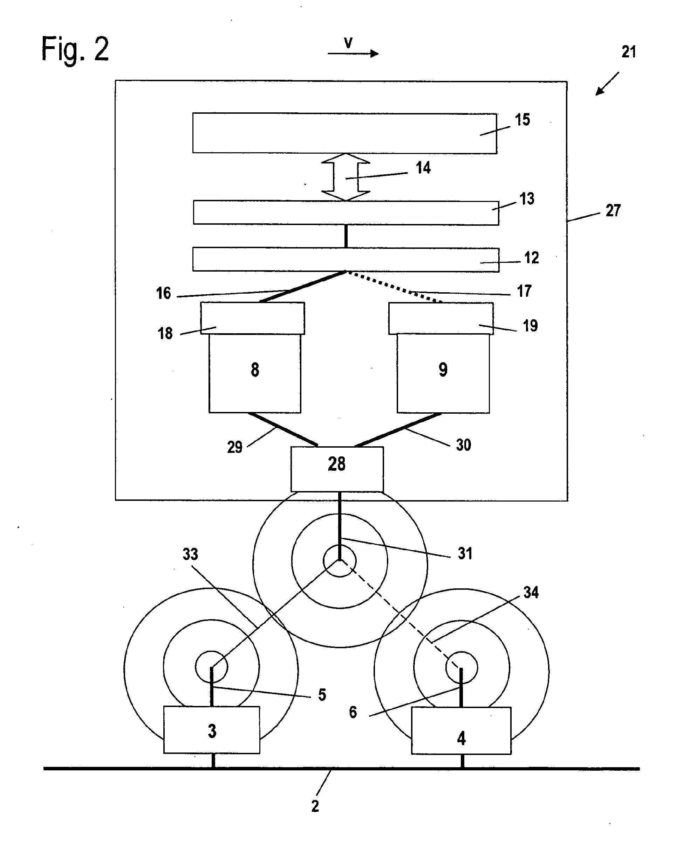

In Fig. 2 ist ein Ausführungsbeispiel einer Datenübertragungseinrichtung 21 gezeigt, deren Aufbau im wesentlichen der der Datenübertragungseinrichtung 1 entspricht. Gleiche Bezugszeichen bezeichnen gleiche Bauteile. Die Datenübertragungseinrichtung 21 besitzt eine mobile Datenübertragungseinheit 27 mit einem ersten Modul 8 und einem zweiten Modul 9. Das erste Modul 9. Das erste Modul 8 ist über eine Datenverbindung 29 mit einem Splitter 28 verbunden und das zweite Modul 9 ist über eine Datenverbindung 30 mit dem Splitter 28 verbunden. Der Splitter 28 besitzt eine Antenne 31, über die das erste Modul 8 eine Datenverbindung 33 zum ersten Zugriffspunkt 3 aufbaut und über die das zweite Modul 9 gleichzeitig eine Standby-Datenverbindung 34 zum zweiten Zugriffspunkt 4 aufbaut. Beide Module 8, 9 nutzen damit die gleiche Antenne 31. Der Splitter 28 trennt die an die Module 8 und 9 gesendeten Daten und faßt die von den Modulen 8 und 9 gesendeten Daten zusammen.

Es kann vorgesehen sein, daß die Datenübertragungseinheit 7 oder 27 mehr als zwei Module besitzt. Die Module können auf der gleichen Frequenz oder auf unterschiedlichen Frequenzen senden. Alle Module 8, 9 besitzen in dem lokalen Netzwerk 2 die gleiche MAC-Adresse (Media Access Control-Adresse), also die gleiche Hardware-Adresse.

## Patentansprüche

1. Datenübertragungseinrichtung mit einem Netzwerk (2) und mit einer mobilen Datenübertragungseinheit (7, 27), wobei das Netzwerk (2) mindestens zwei Zugriffspunkte (3, 4) zur kabellosen Verbindung mit der Datenübertragungseinheit (7, 27) besitzt,
**dadurch gekennzeichnet, daß** die Datenübertragungseinheit (7, 27) mindestens zwei Module (8, 9) zur Übertragung von Daten besitzt und daß die Datenübertragungseinheit (7, 27) eine Umschalteinrichtung (12) zum Umschalten zwischen den Modulen (8, 9) besitzt, die so ausgebildet ist, daß in jedem Schaltzustand der Umschalteinrichtung (12) nur über eines der Module (8, 9) Nutzdaten übertragen werden können.

2. Datenübertragungseinrichtung nach Anspruch 1,
**dadurch gekennzeichnet, daß** die Umschalteinrichtung (12) mit jedem Modul (8, 9) über eine separate Datenverbindung (16, 17) verbunden ist und daß die Umschalteinrichtung (12) so ausgebildet ist, daß in jedem Schaltzustand nur über eine der Datenverbindungen (16, 17) Nutzdaten gesendet werden können.

3. Datenübertragungseinrichtung nach Anspruch 1 oder 2,
**dadurch gekennzeichnet, daß** alle Module (8, 9) in dem Netzwerk (2) eine gemeinsame MAC-Adresse besitzen.

4. Datenübertragungseinrichtung nach einem der Ansprüche 1 bis 3,
**dadurch gekennzeichnet, daß** jedes Modul (8, 9) eine Antenne (10, 11) zur Übertragung von Daten besitzt.

5. Datenübertragungseinrichtung nach einem der Ansprüche 1 bis 3,
**dadurch gekennzeichnet, daß** mindestens zwei Module (8, 9) über einen Splitter (28) mit einer gemeinsamen Antenne (11) verbunden sind.

6. Datenübertragungseinrichtung nach einem der Ansprüche 1 bis 5,
**dadurch gekennzeichnet, daß** mindestens zwei Module (8, 9) auf unterschiedlichen Frequenzen senden.

7. Verfahren zur Datenübertragung zwischen einem Netzwerk (2) und einer mobilen Datenübertragungseinheit (7, 27), wobei das Netzwerk (2) mindestens zwei Zugriffspunkte (3, 4) zur kabellosen Verbindung mit der Datenübertragungseinheit (7, 27) besitzt,
**dadurch gekennzeichnet, daß** die Datenübertragungseinheit (7, 27) mindestens zwei Module (8, 9) zur kabellosen Übertragung von Daten und eine Umschalteinrichtung (12) zum Umschalten zwischen den Modulen (8, 9) besitzt, wobei die Umschalteinrichtung (12) in einem ersten Schaltzustand nur über ein erstes Modul (8) Nutzdaten zu einem ersten Zugriffspunkt (3) überträgt und wobei die Umschalteinrichtung (12) bei Vorliegen einer oder mehrerer vorgegebener Bedingungen in einen zweiten Schaltzustand umschaltet, in dem die Umschalteinrichtung nur über ein zweites Modul (9) Nutzdaten zu einem zweiten Zugriffspunkt (4) überträgt.

8. Verfahren nach Anspruch 7,
**dadurch gekennzeichnet, daß** während das erste Modul (8) Nutzdaten über eine kabellose Datenverbindung (33) zu einem ersten Zugriffspunkt (3) überträgt mindestens ein weiteres Modul (9) nach weiteren Zugriffspunkten (4) sucht und versucht, eine Standby-Datenverbindung (34) zu einem weiteren Zugriffspunkt (4) herzustellen.

9. Verfahren nach Anspruch 8,
**dadurch gekennzeichnet, daß** die Umschalteinrichtung (12) den Umschaltvorgang zwischen dem ersten Modul (8) und einem zweiten Modul (9) ausführt, nachdem das zweite Modul (9) eine betriebsbereite Standby-Datenverbindung (34) zu dem zweiten Zugriffspunkt (4) hergestellt hat.

10. Verfahren nach ein Anspruch 8 oder 9,
**dadurch gekennzeichnet, daß** das Herstellen der Standby-Datenverbindung (34) die Autorisierung und Anmeldung in dem Netzwerk (2), die Abhandlung der Verschlüsselung und die Einbuchung in das Netzwerk (2) umfaßt.

11. Verfahren nach einem der Ansprüche 7 bis 10,
**dadurch gekennzeichnet, daß** das Umschalten ohne Verzögerung und ohne Zwischenspeicherung von Nutzdaten erfolgt.

12. Verfahren nach einem der Ansprüche 7 bis 11,
**dadurch gekennzeichnet, daß** mindestens zwei Module (8, 9) der Datenübertragungseinheit (7, 27) auf unterschiedlichen Frequenzen senden.
